# EUROPEAN PATENT APPLICATION

(11) **EP 4 679 199 A1**
(43) Date of publication of application: **14.01.2026**
(21) Application number: 24306184.3
(22) Date of filing: 12.07.2024
(51) Int. Cl.: G05B 13/02, C03B 5/235, C03B 5/24, G05B 13/04

(54) **METHODS FOR CONTROLLING A MATERIAL PRODUCTION FURNACE AND APPARATUSES FOR IMPLEMENTING THE SAME**

(71) Applicant: SCHNEIDER ELECTRIC INDUSTRIES SAS, 92500 Rueil-Malmaison (FR)
(72) Inventor: VITTE, Eric, 69006 LYON (FR); BOUTIN, Véronique, 38700 SARCENAS (FR); MEULEMAN, René, 6241JH BUNDE (NL)
(74) Representative: Plasseraud IP

(57) **Abstract**

A method for controlling a material production furnace of a material production furnace system is provided, which comprises, the material production furnace being configured for using electric power for heating, the method being performed by a furnace controller of the material production furnace system configured for controlling operations of the material production furnace: generating, by a machine learning engine of the furnace controller, prediction data related to operations of the material production furnace, generating, based on the prediction data, a control command usable for driving operations of the material production furnace, and transmitting the control command to the material production furnace for driving operations of the material production furnace.

## Description

The present disclosure relates to the control of a material production furnace, in particular to apparatuses configured for driving an electrically-powered material production furnace such as for example a glass furnace.

The design of material production furnaces (in particular glass furnaces) have evolved in recent years from gas-powered furnaces to electrically-powered furnaces, which involves an increased complexity for controlling the process of producing glass as compared to conventional processes for producing material (e.g. melting glass) using a flame.

Therefore providing a procedure for controlling a material production furnace, such as for example a glass furnace, which is, at least in part, electrically-powered, is critical to account for the specificities of such furnaces.

There is therefore a need for providing improved schemes for controlling a a material production furnace, such as for example a glass furnace and apparatuses implementing the same that address at least some of the above-described drawbacks and shortcomings of the conventional technology in the art.

It is an object of the present subject disclosure to provide improved schemes for controlling a material production furnace, such as for example a glass furnace, and apparatuses implementing the same.

Another object of the present subject disclosure is to provide an improved scheme for controlling a material production furnace, such as for example a glass furnace, and apparatuses implementing the same for alleviating the above-described drawbacks and shortcomings of conventional schemes, in particular in that the proposed scheme for controlling a material production furnace may be performed for controlling a furnace which is, at least in part, electrically-powered.

To achieve these objects and other advantages and in accordance with the purpose of the present subject disclosure, as embodied and broadly described herein, in one aspect of the present subject disclosure, a method for controlling a material production furnace of a material production furnace system, the material production furnace being configured for using electric power for heating, the method being performed by a furnace controller of the material production furnace system configured for controlling operations of the material production furnace is proposed. The method comprises: Generating, by a machine learning engine coupled with the furnace controller, prediction data related to operations of the material production furnace; Transmitting, to the material production furnace, a control command for driving operations of the material production furnace, wherein the control command is based on the prediction data.

The proposed method advantageously provides a scheme that may be used for controlling a material production furnace which is, at least in part, electrically-powered (vs. a furnace that is gas-powered), as the proposed scheme addresses the increased complexity of driving a furnace which is electrically-powered.

In addition, as the transition from gas-powered furnaces to (at least in part) electrically-powered furnaces opens the way to new furnace control parameters, which significantly increases the available flexibility of furnace control, the proposed scheme advantageously allows leveraging such flexibility in controlling an electrically-powered furnace.

Further, the transitioning from gas-powered furnaces to (at least in part) electrically-powered furnaces also opens the era of dynamic control of a furnace, as the control of an electrically-powered furnace may be dynamic, in contrast to that of a gas-powered furnace where system stability was sought out as one of the system control objectives. The proposed scheme advantageously provides a method for dynamically controlling a furnace by leveraging a new type of system control which is available for electrically-powered furnaces.

In one or more embodiments, the prediction data related to operations of the material production furnace may comprise a candidate setpoint command, and the control command may be based on the candidate setpoint command. In some embodiments, the candidate setpoint command may comprise one or more of an electrode setpoint command, a burner setpoint command, and a raw material infeed setpoint command.

In one or more embodiments, the proposed method may further comprise: Receiving input data comprising one or more of furnace current state data, furnace current power source data, material production recipe data, and production target data. In some embodiments, the prediction data related to operations of the material production furnace may be generated based on the input data.

In one or more embodiments, the proposed method may further comprise: Receiving one or more pre-calculated target temperature profiles of the furnace. In some embodiments, the prediction data related to operations of the material production furnace may be generated based on the one or more target temperature profiles.

In one or more embodiments, the input data may comprise computation ranges applicable to input data parameters. In some embodiments, the prediction data related to operations of the material production furnace may be generated based on the computation ranges.

In one or more embodiments, the machine learning engine may be operatively coupled with a furnace simulator engine (e.g. comprised in the furnace controller). In such embodiments, the control command generated based on the prediction data related to operations of the material production furnace may be generated by the furnace simulator engine. In some embodiments, the proposed method may further comprise a training phase (e.g. of a neural network) of the machine learning engine. In some embodiments, the training phase may comprise: generating training data using the furnace simulator engine, and performing training of the machine learning engine using the training data. In some embodiments, the training data may comprise training control command data generated by the furnace simulator engine based on training input data. In some embodiments, the coupling of the machine learning engine with the furnace simulator engine may comprise a feedback loop. In some embodiments, the proposed method may further comprise: performing continuous training of the machine learning engine using data fed back by the furnace simulator engine to the machine learning engine through the feedback loop.

In one or more embodiments, the machine learning engine may be operatively coupled with a furnace simulator engine comprised in the furnace controller, and the proposed method may further comprise: receiving a query related to a range of a parameter related to electrical input power given a constraint parameter, and generating a response to the query based on the constraint parameter. In some embodiments, the response may comprise a proposed range of the parameter. In some embodiments, the parameter may comprise one or more of: a duration of operation of the furnace (e.g. with respect to a given operation constraint) and an operating power of the furnace. In some embodiments, the control command (usable for driving operations of the material production furnace) which is generated based on the prediction data, may be based on the response. In one or more embodiments, the response may be generated based on input data received by the furnace controller. In some embodiments, the input data may comprise one or more of furnace current state data, furnace current power source data, material production recipe data, and production target data.

In one or more embodiments, the material production furnace may comprise a glass furnace, and the material production furnace system may comprise a glass furnace system.

In yet another aspect of the present subject disclosure, an apparatus is proposed, which comprises a processor and a memory operatively coupled to the processor. The apparatus may be configured to perform a method as proposed in the present subject disclosure.

In yet another aspect of the present subject disclosure, a non-transitory computer-readable medium encoded with executable instructions which, when executed, causes an apparatus comprising a processor operatively coupled with a memory, to perform a method as proposed in the present subject disclosure, is proposed.

In yet another aspect of the present subject disclosure, a computer program product comprising computer program code tangibly embodied in a computer readable medium, said computer program code comprising instructions to, when provided to a computer system and executed, cause said computer to perform a method as proposed in the present subject disclosure, is proposed.

In yet another aspect of the present subject disclosure, a computer program product comprising instructions to, when provided to a computer and executed, cause the computer to perform a method as proposed in the present subject disclosure, is proposed.

In another aspect of the present subject disclosure, a data set representing, for example through compression or encoding, a computer program product as proposed herein, is proposed.

It should be appreciated that the present subject disclosure can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1 illustrates an exemplary glass furnace controller in a glass furnace system to which the proposed methods may be applied according to one or more embodiments of the present subject disclosure;
Figure 2 illustrates an exemplary method for controlling a material production furnace of a material production furnace system according to one or more embodiments of the present subject disclosure;
Figure 3 illustrates an exemplary glass furnace control subsystem according to one or more embodiments of the present subject disclosure;
Figure 4 illustrates exemplary pre-calculated target temperatures profiles that may be used in one or more embodiments of the present subject disclosure;
Figure 5 illustrates exemplary combination of a furnace simulator engine and machine learning engine according to one or more embodiments of the present subject disclosure;
Figure 6 illustrates an exemplary glass furnace control subsystem according to one or more embodiments of the present subject disclosure;
Figure 7 exemplary pre-calculated target temperatures profiles that may be used in one or more embodiments of the present subject disclosure; and
Figure 8 illustrates an apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to functions, engines, block diagrams and flowchart illustrations of the methods, systems, and computer program according to one or more exemplary embodiments. Each described function, engine, block of the block diagrams and flowchart illustrations can be implemented in hardware, software, firmware, middleware, microcode, or any suitable combination thereof. If implemented in software, the functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms « memory » and « computer storage media" include any type of data storage device, such as, without limitation, a hard drive, a flash drive or other flash memory devices (e.g. memory keys, memory sticks, key drive, SSD drives), CD-ROM or other optical storage, DVD, magnetic disk storage or other magnetic storage devices, memory chip(s), Random Access Memory (RAM), Read-Only-Memory (ROM), Electrically-erasable programmable read-only memory (EEPROM), smart cards, or any other suitable medium that can be used to carry or store program code in the form of instructions or data structures which can be read by a computer processor, or a combination thereof. Also, various forms of computer-readable media may transmit or carry instructions to a computer, including a router, gateway, server, or other transmission device, wired (coaxial cable, fiber, twisted pair, DSL cable) or wireless (infrared, radio, cellular, microwave). The instructions may comprise code from any computer-programming language, including, but not limited to, assembly, C, C++, Python, Visual Basic, SQL, PHP, and JAVA.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

As used herein, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs.

In the present subject disclosure, the terms "coupled" and "connected", along with their derivatives, may be indifferently used to indicate that two or more elements are in direct physical or electrical contact with each other, or two or more elements are not in direct contact with each other, but yet still co-operate or interact with each other.

In the present subject disclosure, the terms "machine learning", and "machine learning algorithm" may be indifferently used to refer to any software or algorithm that operates in the field of artificial intelligence. For example, a machine learning software may implement code for executing an algorithm that uses a neural network model of any suitable type for the target use of the algorithm. The terms "machine learning" may therefore be used to refer to any artificial intelligence algorithm or model, and a "machine learning engine" may be configured to implement any suitable artificial intelligence algorithm or model, for example using a neural network model of a suitable type.

It should be understood that embodiments of the present subject disclosure may be used for configuring a material production furnace controller configured for driving operations of a material production furnace which is configured for using electric power for heating, in particular, although not limited to, a glass furnace controller configured for driving glass furnace configured for using electric power for heating.

The configuration of conventional glass furnace controller typically focuses on furnace stability as gas-powered furnaces are equipped with only a few gas actuators. A key point of attention in the control of a glass furnace is to establish relevant internal convections in the melted glass in order to respect a predefined target quality in view of a given glass production recipe.

A furnace configured to using electric power for heating (instead of using solely gas energy for heating) is typically equipped with multiple electrodes configured for providing electric power to the furnace under the control of the glass furnace controller. Having a larger number of electrodes (as compared to the number of gas burners available in a gas-powered furnace) advantageously opens more possibilities to adjust the control, however with counterparts including the complexity of calculating an optimum electrodes' set of setpoints allowing to approach (or reach) one or more target objectives (e.g. one or more of a quality target and energy usage target) given one or more predefined constraints (e.g. a given production plan). The present subject disclosure advantageously provides a scheme that addresses such counterpart while taking advantage of the flexibility of using a furnace configured to using electric power for heating.

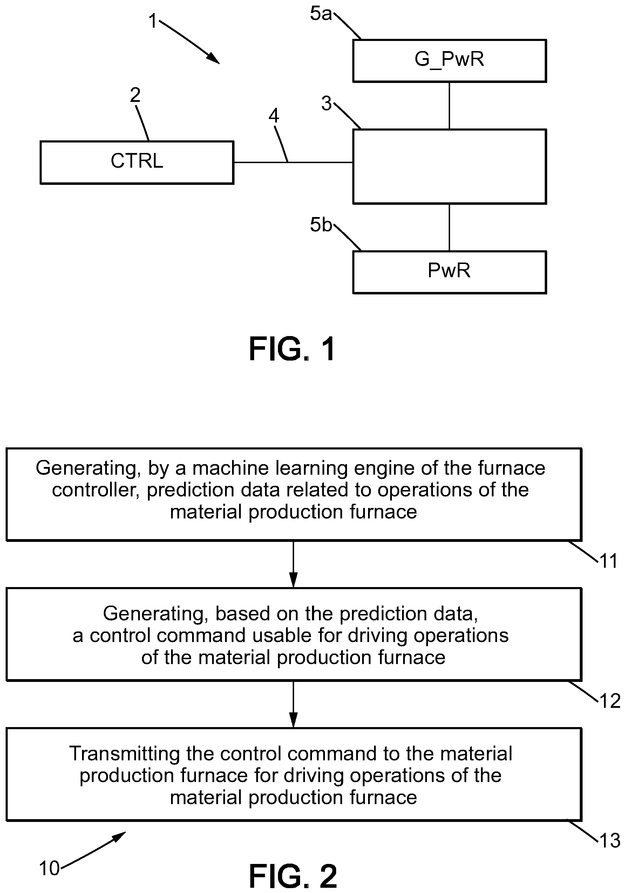

Figure 1 shows an exemplary glass furnace controller in a glass furnace system (1) to which the proposed methods may be applied according to one or more embodiments.

Shown on Fig. 1 is a glass furnace system (1) comprising a glass furnace controller (2) and (glass) furnace (3) which are operatively coupled with each other through an interface (4).

Depending on the embodiment, the glass furnace may be fully electrically-powered or and partially electrically-powered (in which case it may be referred to as a hybrid glass furnace), for example electrically-powered at 60% and gas-powered at 40 %, or electrically powered at 80% and gas-powered at 20%. The electric or hybrid (glass) furnace (3) may therefore incorporate one or more electrodes, which may be configured to be controlled through one or more electrodes setpoints.

In some embodiments, the glass furnace may incorporate one or more gas burners, even though it may be fully electrically-powered, in order to ensure continued minimal operations of the glass furnace in case of a failure or an issue in the electrical powering of the furnace. The electric or hybrid (glass) furnace (3) may therefore incorporate one or more burners, which may be configured to be controlled through one or more burners setpoints.

The electric or hybrid (glass) furnace (3) may therefore be configured to receive, from the glass furnace controller (2), setpoint data related to one or more of burners setpoints and electrode setpoints.

As illustrated on Fig. 1, the (glass) furnace (3) may therefore be configured to receive gas power through a gas power source (5b) and to receive electric power through an electric power source (5a).

In some embodiments, the electric power source (5a) providing electric power to the (glass) furnace (3) may be a node of an energy distribution network, such as for example a smart grid energy network.

Depending on the embodiment, the glass furnace controller (2) may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

Fig. 2 illustrates a method (10) for controlling a material production furnace of a material production furnace system according to embodiments of the present subject disclosure.

One considers a material production furnace being configured for using electric power for heating, the material production furnace being part of a material production furnace system such as illustrated on Fig. 1 which comprises a furnace controller configured for controlling operations of the material production furnace.

In the following, the proposed scheme is described based on the exemplary glass furnace system illustrated by Fig. 1. However, a person skilled in the art would understand that, even though the present description refers to glass furnace system, any suitable material production furnace system comprising a material production furnace configured for using electric power for heating may be used in place of the glass furnace system comprising a glass furnace, such as illustrated by Fig. 1, which is given by way of an example only.

In one or more embodiments, the furnace controller (2) may be configured with a machine learning engine.

It should be understood that embodiments of the present subject disclosure are not limited to any specific type of machine learning (artificial intelligence) model or algorithm or any specific implementation thereof. Rather, any suitable machine learning model or algorithm, with or without training depending on the embodiment, may be used for implementing the machine learning engine configured in the furnace controller (2).

In one or more embodiments, the machine learning engine may be configured to generate (11) prediction data related to operations of the (glass) furnace (3).

In some embodiments, the prediction data generated by the machine learning engine may comprise data usable as a setpoint proposal for one or more control parameters used by furnace controller (2) to control operations of the (glass) furnace (3).

In some embodiments, the prediction data generated by the machine learning engine may comprise data representing a prediction of a state of the (glass) furnace (3). Depending on the embodiments, the state of the (glass) furnace (3) may be represented by data corresponding to one or more (predefined) state parameters or state variables of the (glass) furnace (3) (e.g. temperature of the furnace). In some embodiments, the state parameters and state variables may be predefined for the furnace (3).

In one or more embodiments, the prediction data generated by the machine learning engine may be used to generate (12), based on the prediction data, a control command usable for driving operations of the material production furnace.

For example, in some embodiments, a control command comprising one or more set points (which may sometimes be referred to interchangeably herein as "actuator set points" or "actuator setpoints") may be generated based on the prediction data produced by the machine learning engine. For example, one or more setpoints for controlling the furnace may be generated based on prediction data representing a state of the furnace (e.g. respective predictions of the value of one or more state variables and/or state parameters), for example given a production target.

For example, in some embodiments, the prediction data related to operations of the material production furnace may comprise a candidate setpoint command, and the control command may be based on the candidate setpoint command. For example, depending on the embodiment, the candidate setpoint command may comprise one or more of an electrode setpoint command, a burner setpoint command, and a raw material infeed setpoint command.

In one or more embodiments, the control command may be transmitted (13) to the material production furnace for driving the operations of the material production furnace.

Thanks to the use of a machine learning engine which may be configured to generate, based on input data during an inference phase, prediction data related to operations of the material production furnace, an improved method of controlling such material production furnace may be provided that advantageously allows generating control data for controlling the multiple electrodes of a fully electrical or hybrid material production furnace (e.g. a fully electrical or hybrid glass furnace).

For example, embodiments of the proposed scheme may advantageously be used to provide the ability to serve so-called demand response opportunities, that is, to generate candidate control commands (response opportunities) that take into account one or more constraints and that are operable (usable) for fulfilling one or more given target objectives for a fully electrical or hybrid material production furnace.

The flexibility in control operations provided by the proposed scheme advantageously makes it possible to dynamically change one or more setpoints used for the control of a furnace (e.g. a glass furnace) while ensuring a target quality in material production (e.g. a targeted glass quality). Such dynamic control ability may prove particularly useful in circumstances in which it is desired to reduce for a given time period the electrical consumption of the fully electrical or hybrid material production furnace, for example in order to offer load sheading capability to a grid network to which the material production furnace system is operatively coupled.

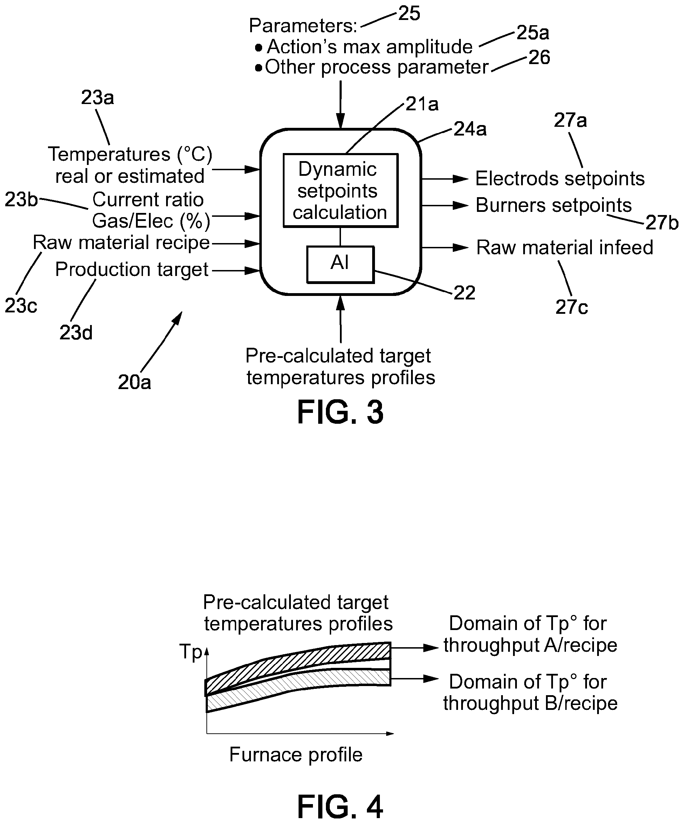

Reference is now made to Fig. 3, which shows an exemplary glass furnace control subsystem (20a) according to one or more embodiments.

Fig. 3 shows a glass furnace control subsystem (20a) comprising a glass furnace controller (24a) which comprises a dynamic setpoint calculation engine (21a) and a machine learning engine (22).

In one or more embodiments, the glass furnace controller (24a) may be configured to receive input data comprising one or more of furnace current state data (23a), furnace current power source data (23b), material production recipe data (23c), and production target data (23d). Examples of furnace current state data (23a) include, without limitation, temperature data corresponding to temperatures in the furnace (which may, depending on the embodiment, be real (measured using one or more sensors) or estimated), as illustrated on Fig. 3. Examples of furnace current power source data (23b) include, without limitation, data representing a current (at a given time point) energy usage ratio, for example of gas over electricity, for example expressed as a percentage, as illustrated on Fig. 3. Examples of material production recipe data (23c) include, without limitation, data representing one or more raw material recipes to be used for material production in the furnace, as illustrated on Fig. 3. Examples of production target data (23d) include, without limitation, data representing one or more production targets, as illustrated on Fig. 3.

In one or more embodiments, the machine learning engine (22) may be configured, in some embodiments during a training phase, to generate the prediction data related to operations of the material production furnace based on input data that comprises one or more of furnace current state data, furnace current power source data, material production recipe data, and production target data.

In one or more embodiments, the glass furnace controller (24a) may be configured to receive input data comprising one or more pre-calculated target temperature profiles of the furnace, an example of which is illustrated on Fig. 4.

Fig. 4 shows exemplary pre-calculated target temperatures profiles that may be used as input data to the machine learning engine in one or more embodiments.

In some embodiments, target temperatures profiles may be calculated for the furnace that correspond to one or more domains (e.g. intervals) of temperatures that can be used to achieve a target level of material production ("throughput A" or "throughput B") for a given raw material recipe ("recipe") at respective areas of the furnace ("furnace profile"). Fig. 4 shows first and second exemplary domains of temperature for respective first and second target levels of material production for a given raw material recipe (respectively "throughput A / recipe" and "throughput B / recipe") which vary with the area of the furnace (represented on the exemplary profiles by the "furnace profile" variable).

Using pre-calculated target temperatures profiles that are provided as input data may advantageously provide the ability to (at least attempt to) ensure that some temperature gradients that are to be used in certain areas of the furnace are complied with.

In one or more embodiments, the machine learning engine (22) may be configured, in some embodiments during a training phase, to generate the prediction data related to operations of the material production furnace based on one or more pre-calculated target temperature profiles of the furnace provided in input data.

In one or more embodiments, the glass furnace controller (24a) may be configured to receive input data comprising computation ranges applicable to input data parameters (25).

For example, as illustrated on Fig. 3, the input data provided to the glass furnace controller (24a) may comprise, for one or more of the parameters (25) provided as input data to the glass furnace controller (24a), a range of values (25a) (e.g. a maximum range of values, a maximum gradient, a maximum amplitude, etc.) (respective ranges of values may also be referred to herein as "computation ranges") that are to be used for the corresponding parameter.

In one or more embodiments, the machine learning engine (22) may be configured, in some embodiments during a training phase, to generate the prediction data related to operations of the material production furnace based on input data comprising computation ranges (25a) applicable to input data parameters (25). In such embodiments, the prediction data related to operations of the material production furnace may be generated based on the computation ranges (25a).

In one or more embodiments, as illustrated by Fig. 3, the glass furnace controller (24a) may be configured to receive input data that further comprises other process parameters (26), and the machine learning engine may be correspondingly configured to use such other process parameters (26) for the generation of the prediction data.

Using a machine learning engine for controlling a material production furnace configured for using electric power for heating therefore provides the advantage of being able to use a large number and wide variety of input parameters for generating prediction data related to operations of the material production furnace, which can be used for generating one or more control command for driving the furnace while taking into account all of the input parameters provided to the machine learning engine.

In one or more embodiments, the machine learning engine (22) may generate prediction data related to operations of the material production furnace based on input data that comprises one or more of furnace current state data, furnace current power source data, material production recipe data, production target data, one or more pre-calculated target temperature profiles of the furnace, computation ranges applicable to input data parameters, and other process parameters that can be used for controlling the furnace. In some embodiments, the prediction data related to operations of the material production furnace may be generated based on such input data.

In one or more embodiments, the prediction data related to operations of the material production furnace may comprise one or more candidate setpoint commands, such as, for example, a (candidate) electrode setpoint command, a (candidate) burner setpoint command, and a (candidate) raw material infeed setpoint command.

In one or more embodiments, the prediction data generated by the machine learning engine (22) may be provided as input data to the dynamic setpoints calculation engine (21a).

In one or more embodiments, the dynamic setpoints calculation engine (21a) may be configured to generate a control command usable for driving operations of the furnace based on the prediction data received as input data.

For example, depending on the embodiment, the control command may comprise one or more of an electrode setpoint command (27a), a burner setpoint command (27b), and a raw material infeed setpoint command (27c), which commands may be outputted by the glass furnace controller (24a) as illustrated on Fig. 3 for transmission to the furnace.

Examples of an electrode setpoint command (27a) include, without limitation, one or more electrode setpoints for driving the electrodes of the furnace, as illustrated on Fig. 3.

Even though the furnace is configured for using electric power for heating, and may for example be fully electric, in some embodiments, the furnace may still be configured with one or more gas burners for heating, in order to keep an alternate power source available so that disruption of the operations of the furnace may be kept to a minimum, for example in case of an electrical power outage, or in order to keep available an additional power source that can provide supplemental heat in the furnace. In some embodiments, the control command generated using the proposed scheme may comprise a burner setpoint command (27b) for driving the one or more gas burners configured in the furnace. Examples of a burner setpoint command (27b) include, without limitation, one or more gas burner setpoints for driving the one or more gas burners of the furnace (as the case may be), as illustrated on Fig. 3.

Examples of a raw material infeed setpoint command (27c) include, without limitation, one or more raw material infeed commands for controlling the amount of raw material that should be fed to the furnace, as illustrated on Fig. 3.

In one or more embodiments, the dynamic setpoints calculation engine (21a) may comprise a simulator engine (not represented on Fig. 3) that is configured as a simulator of operations of the furnace.

In some embodiments, the simulator engine may comprise a so-called "direct" simulator of the material production furnace, which may be configured to receive as input data one or more control commands (that may correspond to control commands that could be used to control the simulated material production furnace), and produce as output data representing a result of operations of the simulated material production furnace given the input control commands (e.g. data representing measured temperatures in the furnace, measured power consumption of the furnace, or a combination thereof).

Using a simulator engine configured as a simulator of operations of the furnace may advantageously allow monitoring the impact on the state and/or operations of the furnace of a control command (generated based on prediction data generated by the machine learning) that would be fed to the furnace.

For example, the simulator engine may be used in one or more embodiments to estimate the extent to which a target objective (e.g. a target quality of produced material, a target (electrical and/or gas) power consumption, or a combination thereof) is reached or reachable given the input parameters fed to the machine learning engine.

As driving a material production furnace configured for using electric power for heating may be very complex given that it may not possible to abruptly change (or even interrupt) the operations of the furnace, it may be desirable to validate control command data generated based on the prediction data generated by the machine learning engine by running such control command data through the simulator engine.

In one or more embodiments, the simulator engine may be advantageously used in combination with the machine learning engine to optimize, in some embodiments in real time or quasi-real time, the control of the furnace, so that control management may be easy to master and maintain by an end user of a material production furnace system improved according to embodiments of the present subject disclosure.

The combination of a machine learning engine operatively coupled to a furnace simulator engine may sometimes be referred herein as a "digital twin" or an "embedded digital twin".In one or more embodiments wherein a machine learning engine is operatively coupled with a furnace simulator engine comprised in the furnace controller, the control command generated based on the prediction data related to operations of the material production furnace may be generated by the simulator engine.

Conventional advanced process control schemes for material production furnace systems are typically based on a so-called "inverted limited model", which is configured for generated estimates of input parameters to be used for controlling the furnace given control commands provided as input data to the inverted limited model (hence the name inverted). A significant drawback of this inverted limited model is the low ability of the user to maintain the same inverted model over long period of use of the furnace, in particular in cases where the production recipe used for producing material in the furnace changes, as such change requires updating the furnace model's response.

In contrast, the different approach used in the proposed scheme, including in embodiments in which a digital twin is used, provides a greater flexibility for furnace operation control. For example, a change in the production recipe can be managed through a change in the input data provided to the machine learning model so that a new control command may be generated based on updated prediction data generated by the machine learning model.

In one or more embodiments, the machine learning engine may comprise a neural network (of any suitable type, for example a convolutional neural network), and a training phase of the neural network of the machine learning engine may be performed.

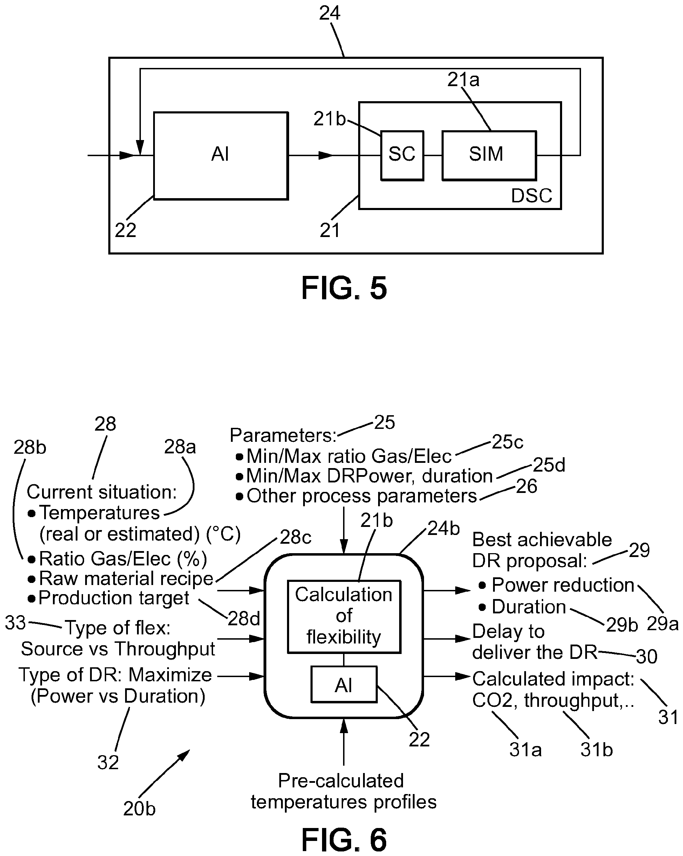

In one or more embodiments where a digital twin (a furnace simulator engine coupled to the machine learning engine) is used, the training phase of a neural network of the machine learning engine may be performed using the simulator, for example as illustrated by Fig. 5.

Fig. 5 shows an exemplary combination of a furnace simulator engine and machine learning engine according to embodiments of the present subject disclosure.

As shown on Fig. 5, in one or more embodiments, a furnace controller 24 (such as illustrated on Fig. 3) may comprise a machine learning engine (22) and dynamic setpoint calculation engine (21a), such as illustrated on Fig. 3, which comprises a material production furnace simulator engine (21a) configured for simulating a material production furnace.

In some embodiments, the machine learning engine (22) may be operatively coupled to the dynamic setpoint calculation engine (21a), so that prediction data generated by the machine learning engine (22) may be provided as input data to the dynamic setpoint calculation engine (21a), for example to a setpoint calculation engine (21b) of the dynamic setpoint calculation engine (21a).

The setpoint calculation engine (21b) of the dynamic setpoint calculation engine (21a) may be configured to determine, based on prediction data received from the machine learning engine (22), a control command usable for driving operations of the material production furnace.

In some embodiments, the setpoint calculation engine (21b) may be configured for providing a generated control command as input data to the material production furnace simulator engine (21a), so that the material production furnace simulator engine (21a) may generate data representing simulated operations of the material production furnace under this control command (for example comprising data describing material produced by the simulated furnace, data representing power consumption of the furnace when operating under conditions corresponding to the input data, or a combination thereof).

In some embodiments, data outputted by the simulator may be fed back to the machine learning engine (22) so that such data may be used by the machine learning engine (22) as input data, for example during a training phase.

For example, in one or more embodiments, the machine learning engine (22) may comprise a neural network, which may undergo a training phase, during which training data may be generated using the material production furnace simulator engine (21a). In some embodiments, the training data generated using the material production furnace simulator engine (21a) may comprise training control command data generated by the simulator based on training input data.

The training of the neural network may in some embodiments use training data generated by the material production furnace simulator engine (21a), and fed back to the machine learning engine (22), for example as illustrated on Fig. 5.

In some embodiments, the coupling of the machine learning engine (22) with the material production furnace simulator engine (21a) may comprise a feedback loop, and continuous training of the neural network of the machine learning engine (22) may be performed using data fed back by the material production furnace simulator engine (21a) to the machine learning engine (22) through the feedback loop, for example as illustrated on Fig. 5.

In one or more embodiments, the proposed scheme may further be used for simulating the behaviour of the furnace given candidate control commands, so as to determine a control command that best matches one or more target objectives given predefined constraints related to operations of the furnace.

In some embodiments, the proposed scheme may be used for determining so-called "demand-response" (DR) data which comprise data describing a "demand" that may be formulated to the furnace, for example in the form of one or more control parameters (which may reflect one or more constraints to be taken into account), and data describing a "response" that may be provided by the furnace, for example in the form of data representing operations of the furnace if controlled using the one or more control parameters (e.g. data representing performances of the furnace, data describing impact of the production, etc.).

The proposed furnace controller may in some embodiments be advantageously configured to generate demand-response (DR) proposals (which may also be referred to herein as "demand-response opportunities"), which provides an improved flexibility for the control of the furnace, which enhanced flexibility may for example be leveraged to accommodate various changes, such as for example in case of a change of raw material recipe for material production in the furnace, or in case it is desirable to change the ratio electrical power over gas power currently used by the furnace.

As discussed above, in some embodiments, the proposed furnace controller may advantageously further comprise a simulator engine which may comprise a so-called "direct" simulator of the material production furnace, which may be configured to receive as input data one or more control commands (that may correspond to control commands that could be used to control the simulated material production furnace), and produce as output data representing a result of operations of the simulated material production furnace given the input control commands (e.g. data representing measured temperatures in the furnace, measured power consumption of the furnace, or a combination thereof).

In some embodiments, the simulator engine may advantageously be used to feed "questions" or "queries" to the simulator engine which may have been generated by the machine learning engine, in order to estimate, through the "response" of the simulator engine, how the furnace would behave when controlled using the so-called queries.

In one or more embodiments where the machine learning engine is operatively coupled with a furnace simulator engine comprised in the furnace controller, the proposed scheme may comprise: receiving a query related to a range of a parameter related to electrical input power given a constraint parameter, and generating a response to the query based on the constraint parameter, the response comprising a proposed range of the parameter.

Fig. 6 illustrates an exemplary glass furnace control subsystem (20b) according to one or more embodiments.

Fig. 6 shows a glass furnace control subsystem (20b) comprising a glass furnace controller (24b) which comprises a flexibility calculation engine (21b) and a machine learning engine (22).

In one or more embodiments, the glass furnace controller (24b) may be configured to receive input data (28) representing a current situation with respect to operations of the furnace (e.g. one or more current (at a given time) operating parameters of the furnace). Depending on the embodiment, data (28) representing a current situation with respect to operations of the furnace may comprise one or more of furnace current state data (28a), furnace current power source data (28b), material production recipe data (28c), and production target data (28d). Examples of furnace current state data (28a) include, without limitation, temperature data corresponding to temperatures in the furnace (which may, depending on the embodiment, be real (measured using one or more sensors) or estimated), as illustrated on Fig. 6. Examples of furnace current power source data (28b) include, without limitation, data representing a current (at a given time point) energy usage ratio, for example of gas over electricity, for example expressed as a percentage, as illustrated on Fig. 6. Examples of material production recipe data (28c) include, without limitation, data representing one or more raw material recipes to be used for material production in the furnace, as illustrated on Fig. 6. Examples of production target data (28d) include, without limitation, data representing one or more production targets, as illustrated on Fig. 6.

In one or more embodiments, the machine learning engine (22) may be configured, in some embodiments during an inference phase, to generate prediction data related to operations of the material production furnace based on input data that comprises one or more of furnace current state data, furnace current power source data, material production recipe data, and production target data.

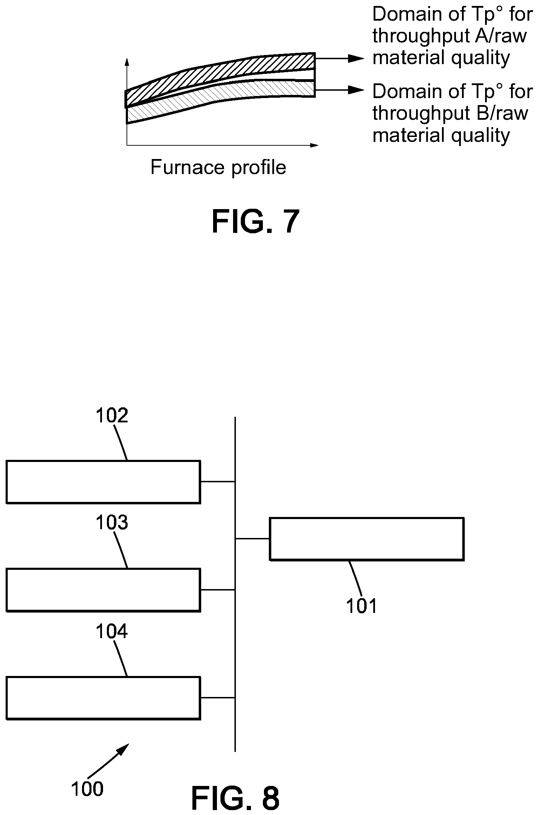

In one or more embodiments, the glass furnace controller (24b) may be configured to receive input data comprising one or more pre-calculated target temperature profiles of the furnace, an example of which is illustrated on Fig. 7.

Fig. 7 shows exemplary pre-calculated target temperatures profiles that may be used as input data to the machine learning engine (22) in one or more embodiments.

In some embodiments, target temperatures profiles may be calculated for the furnace that correspond to one or more domains (e.g. intervals) of temperatures that can be used to achieve a target level of material production ("throughput A" or "throughput B") for a given target quality of raw material ("raw material quality") at respective areas of the furnace ("furnace profile"). Fig. 7 shows first and second exemplary domains of temperature for respective first and second target levels of material production for a given target quality of raw material (respectively "throughput A / raw material quality" and "throughput B / raw material quality") which vary with the area of the furnace (represented on the exemplary profiles by the "furnace profile" variable).

Using pre-calculated target temperatures profiles that are provided as input data may advantageously provide the ability to (at least attempt to) ensure that some temperature gradients that are to be used in certain areas of the furnace are complied with.

Referring back to Fig. 6, in one or more embodiments, the machine learning engine (22) may be configured, in some embodiments during an inference phase, to generate the prediction data related to operations of the material production furnace based on one or more pre-calculated target temperature profiles of the furnace provided in input data.

In one or more embodiments, the glass furnace controller (24b) may be configured to receive input data related to (e.g. one or more values of) a parameter comprising one or more of a duration of operation(s) of the furnace (e.g. with respect to a given constraint, for example represented by a parameter, such as one or more of a given energy level, a given power consumption level, a given production level, and a given quality level) and an operating power of the furnace.

In one or more embodiments, as illustrated on Fig. 6, the input data provided to the glass furnace controller (24b) may comprise data describing a type of response (32) (which may also be referred to as a "type of Demand-Response") inputted to the glass furnace controller (24b). Examples of data describing a type of response inputted to the glass furnace controller (24b) include, without limitation, data describing whether priority is to be given (for generating the response provided by the furnace controller (24b)) to power consumption or to duration of operations of the furnace (e.g. with respect to a given constraint, for example represented by a parameter, such as one or more of a given energy level, a given power consumption level, a given production level, and a given quality level). The type of demand-response (DR) (32) parameter may advantageously be used for associating levels of priority to different parameters involved in the generation of the response to the query. For example, it may be desirable to indicate to the furnace controller (24b) whether power consumption should be optimized in priority over duration of material production, or vice-versa.

A person skilled in the art would understand that, even though the present description refers to focusing on power consumption over duration of material production, any other suitable parameters may be used for defining respective priority levels and associated focus in the generation of the response to the query in place of the power consumption and duration of material production parameters, such as illustrated by Fig. 6, which are given by way of an example only.

In one or more embodiments, the machine learning engine (22) may be configured, in some embodiments during an inference phase, to generate the prediction data related to operations of the material production furnace based on input data comprising computation ranges (25c - 25d), such as for example one or more of a min/max ratio of gas power over electrical power (25c, "Min/Max ratio Gas/Elec") and a min/max ratio of power consumption over duration of material production (25d, "Min/Max DR Power, Duration"), as illustrated on Fig. 6, applicable to input data parameters (25).

In one or more embodiments, as illustrated by Fig. 6, the glass furnace controller (24b) may be configured to receive input data that further comprises other process parameters (26), and the machine learning engine may be correspondingly configured to use such other process parameters (26) for the generation of the prediction data.

Using a machine learning engine for controlling a material production furnace configured for using electric power for heating therefore provides the advantage of being able to use a large number and wide variety of input parameters in the query sent to the furnace controller (24b), which may be used by the machine learning engine (22) as input data for generating prediction data related to operations of the material production furnace.

In one or more embodiments, the machine learning engine (22) may generate prediction data related to operations of the material production furnace based on input data that comprises one or more of furnace current state data, furnace current power source data, material production recipe data, production target data, one or more pre-calculated target temperature profiles of the furnace, type of demand-response data, and other process parameters that can be used for controlling the furnace.

In one or more embodiments, the prediction data related to operations of the material production furnace may comprise one or more candidate setpoint commands, such as, for example, a (candidate) electrode setpoint command, a (candidate) burner setpoint command, and a (candidate) raw material infeed setpoint command.

In one or more embodiments, the prediction data generated by the machine learning engine (22) may be provided as input data to the flexibility calculation engine (21b).

In one or more embodiments, the flexibility calculation engine (21b) may be configured to calculate a (e.g. maximum) flexibility with respect to a parameter (e.g. representing power (electricity/gas) source or throughput) that can be supported by the production process in the furnace without impacting production (for example represented by quality and throughput parameters).

In one or more embodiments, the input data provided to the glass furnace controller (24b) may comprise data describing a type of flexibility (33) that is to be calculated (for example a parameter with respect to which the flexibility is to be calculated) by the flexibility calculation engine (21b). Examples of data describing a type of flexibility inputted to the glass furnace controller (24b) include, without limitation, data describing a parameter with respect to which the flexibility calculation engine (21b) is to calculate a flexibility value (e.g. a maximum flexibility). For example, in embodiments in which a plurality of power sources are available for powering the furnace (e.g. gas and electricity), it may be desirable to indicate to the flexibility calculation engine (21b) that the flexibility calculation is to be performed with respect to a power source (e.g. calculation of (e.g. maximum) flexibility with respect to electricity and gas power sources that can be supported by the process without impacting production). For example, the calculation of flexibility may determine to what extent more (or less) gas power (or more (or less) electricity power) may be used for performing the material production process (of the furnace) without impacting quality of the production or throughput of the production. For example, it may be desirable to indicate to the flexibility calculation engine (21b) that the flexibility calculation is to be performed with respect to a production throughput (e.g. calculation of (e.g. maximum) flexibility with respect to production throughput that can be supported by the process without impacting quality of the production).

In some embodiments, the flexibility calculation engine (21b) may comprise a simulator engine coupled operatively coupled with the machine learning model, for example such as illustrated by Fig. 5.

The simulator engine may receive in some embodiments as input data prediction data generated by the machine learning engine (22), possibly through a setpoint calculation engine as illustrated on Fig. 5, and may be configured to generate data that represents how the furnace would behave in case control command data corresponding to the prediction data was used to drive the furnace.

Therefore, advantageously, in one or more embodiments, the machine learning engine may be used to generate prediction data based on which candidate control commands can be generated and used as a question (query)(demand) submitted to the simulator engine, which is configured to provide a response to the demand.

In some embodiments, various demands can then be tested using the combination of the machine learning engine and the furnace simulator engine, in order to determine whether the corresponding response fulfils one or more (predefined) criteria.

In some embodiments, a feedback loop coupling the output of the simulator engine to the input of the machine learning engine, such as illustrated by Fig. 5, may advantageously be used for iterating a process of determining a demand corresponding to one or more control commands of the furnace that best matches criteria defined for the response.

In one or more embodiments, the flexibility calculation engine (21b) may be configured to generate as output data response data corresponding to one or more (predefined) criteria.

For example, as illustrated on Fig. 6, response data may comprise in some embodiments data representing a best achievable proposal (29, "Best achievable DR proposal") in view of predefined criteria such as for example one or more of power reduction (29a) and duration of the production (29b).

As another example also illustrated on Fig. 6, response data may comprise in some embodiments data representing a delay necessary to deliver a demand-response (DR) (30, "Delay to deliver the DR").

As another example also illustrated on Fig. 6, response data may comprise in some embodiments data representing a estimated impact of the proposed demand-response (31) such as for example in terms of CO2 impact (31a), throughput (31b), etc.

Figure 8 illustrates an exemplary furnace controller apparatus 100 configured to use features in accordance with embodiments of the present subject disclosure.

The furnace controller apparatus 100 may include a control engine 101, a machine learning engine 102, calculation engine 103, a memory 105, and a power supply (e.g., a battery, plug-in power supply, etc.) (not represented on the figure). The furnace controller apparatus may be configured with a data communication interface (not represented on the figure) configured for coupling the apparatus to a material production furnace for driving the material production furnace through the data communication interface (not represented on the figure), and/or with an electrical signal interface for electrical coupling of the apparatus 103 with a material production furnace.

In the architecture illustrated on Fig. 8, all of the machine learning engine 102, calculation engine 103, and memory 104 are operatively coupled with one another through the control engine 101.

In one or more embodiments, the machine learning engine 102 is configured to perform various aspects of embodiments of the proposed methods controlling a material production furnace as described herein. For example, in some embodiments, the machine learning engine 102 may be configured to generate prediction data related to operations of the material production furnace.

In one or more embodiments, the calculation engine 103 is configured to perform various aspects of embodiments of the proposed methods controlling a material production furnace as described herein. For example, in some embodiments, the calculation engine 103 may be configured to generate, based on the prediction data generated by the machine learning engine 102, a control command usable for driving operations of the material production furnace. In some embodiments, the calculation engine 103 may further be configured to transmit the control command to the material production furnace for driving operations of the material production furnace.

In one or more embodiments, the calculation engine 103 may be configured to calculate setpoint commands based on prediction data generated by the machine learning engine 102.

In one or more embodiments, the calculation engine 103 may be configured to generate data representing one or more demand-response proposals based on prediction data generated by the machine learning engine 102.

In one or more embodiments, the calculation engine 103 is configured to manage one or more of a data communication interface and electrical signal interface with the material production furnace in situations where the furnace controller apparatus 100 is coupled to a material production furnace to be driven.

The control engine 101 includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 101 may also comprise, or may be in communication with, computer storage media, such as, without limitation, the memory 104, capable of storing computer program instructions or software code that, when executed by the processor, causes the processor to perform the elements described herein. In addition, the memory 104 may be any type of data storage computer storage medium, capable of storing a data structure representing a computer network to which the furnace controller apparatus 100 belongs, coupled to the control engine 101 and operable with the calculation engine 103 and the machine learning engine 102 to facilitate management and processing of data stored in association therewith.

In embodiments of the present subject disclosure, the furnace controller apparatus 100 is configured for performing the methods described herein.

It will be appreciated that the furnace controller apparatus 100 shown and described with reference to Fig. 8 is provided by way of example only. Numerous other architectures, operating environments, and configurations are possible. Other embodiments of the node may include fewer or greater number of components, and may incorporate some or all of the functionality described with respect to the furnace controller apparatus components shown in Fig. 8. Accordingly, although the control engine 101, machine learning engine 102, calculation engine 103, and memory 104 are illustrated as part of the furnace controller apparatus 100, no restrictions are placed on the location and control of components 102 - 104. In particular, in other embodiments, components 102 - 104 may be part of different entities or computing systems.

Depending on the embodiment, the apparatus 100 may be implemented in software, as described above, or in hardware, such as an application specific integrated circuit (ASIC), or in the form of a combination of hardware and software, such as for example a software program intended to be loaded and executed on a component of FPGA (Field Programmable Gate Array) type.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for controlling a material production furnace of a material production furnace system, the material production furnace being configured for using electric power for heating, the method being performed by a furnace controller of the material production furnace system configured for controlling operations of the material production furnace, and comprising:
Generating, by a machine learning engine of the furnace controller, prediction data related to operations of the material production furnace;
Generating, based on the prediction data, a control command usable for driving operations of the material production furnace;
Transmitting the control command to the material production furnace for driving operations of the material production furnace.

2. The method according to claim 1, wherein the prediction data related to operations of the material production furnace comprises a candidate setpoint command, and the control command is based on the candidate setpoint command.

3. The method according to claim 2, wherein the candidate setpoint command comprises one or more of an electrode setpoint command, a burner setpoint command, and a raw material infeed setpoint command.

4. The method according to any of the preceding claims, further comprising:
Receiving input data comprising one or more of furnace current state data, furnace current power source data, material production recipe data, and production target data,
Wherein the prediction data related to operations of the material production furnace is generated based on the input data.

5. The method according to any of the preceding claims, further comprising:
Receiving one or more pre-calculated target temperature profiles of the furnace,
Wherein the prediction data related to operations of the material production furnace is generated based on the one or more target temperature profiles.

6. The method according to any of the preceding claims, wherein the input data comprise computation ranges applicable to input data parameters, and wherein the prediction data related to operations of the material production furnace is generated based on the computation ranges.

7. The method according to any of the preceding claims, wherein the machine learning engine is operatively coupled with a furnace simulator engine comprised in the furnace controller, the method further comprising:
Generating, by the furnace simulator engine, the control command based on the prediction data related to operations of the material production furnace.

8. The method according to claim 7, further comprising a training phase of the machine learning engine, the training phase comprising:
Generating training data using the furnace simulator engine, wherein the training data comprises training control command data generated by the furnace simulator engine based on training input data; and
Performing training of the machine learning engine using the training data.

9. The method according to any of claims 7 and 8, wherein the coupling of the machine learning engine with the furnace simulator engine comprises a feedback loop, the method further comprising: performing continuous training of the machine learning engine using data fed back by the furnace simulator engine to the machine learning engine through the feedback loop.

10. The method according to any of the preceding claims, wherein the machine learning engine is operatively coupled with a furnace simulator engine comprised in the furnace controller, the method further comprising:
Receiving a query related to a range of a parameter related to electrical input power given a constraint parameter;
Generating a response to the query based on the constraint parameter, the response comprising a proposed range of the parameter.

11. The method according to claim 10, wherein the parameter comprises one or more of a duration of operation of the furnace with respect to a given operation constraint and an operating power of the furnace.

12. The method according to any of claims 10 and 11, wherein the control command is based on the response.

13. The method according to any of claims 10 to 12, wherein the response is generated based on input data received by the furnace controller, wherein the input data comprises one or more of furnace current state data, furnace current power source data, material production recipe data, and production target data.

14. The method according to any of the preceding claims, wherein the material production furnace comprises a glass furnace, and the material production furnace system comprises a glass furnace system.

15. A furnace control apparatus comprising a processor and a memory operatively coupled to the processor, wherein the furnace control apparatus is configured to perform a method according to any of claims 1 to 14.

16. A computer program product comprising instructions to, when provided to a computer and executed, cause the computer to perform a method according to any of claims 1 to 14.

17. A data set representing, through compression or encoding, a computer program product according to claim 16.
